# EUROPEAN PATENT APPLICATION

(11) **EP 4 733 112 A1**
(43) Date of publication of application: **29.04.2026**
(21) Application number: 25210972.3
(22) Date of filing: 24.10.2025
(51) Int. Cl.: B60K 17/04, F16H 3/50, F16H 63/30, F16H 3/44

(54) **WHEEL HUB FOR VEHICLE AXLE COMPRISING AN IMPROVED INTEGRATED REDUCTION SYSTEM**

(30) Priority: 25.10.2024 IT 202400023913
(71) Applicant: IVECO S.P.A., 10156 Torino (IT)
(72) Inventor: PEREIRA DE LEMOS, José Francivaldo, 10156 Torino (IT)
(74) Representative: Studio Torta S.p.A.

(57) **Abstract**

Wheel hub (10) for an axle (4) of a vehicle (1) comprising a reduction unit (15) housed inside a chamber (13) defined between the wheel hub (10) and a casing (5) of the axle (4) and configured to vary the torque transmitted by a drive-shaft (7a, 7b) of the axle (4) to a respective wheel hub (10), the reduction unit (15) comprising a gearing (16) configured to define two transmission ratios as a function of the position of an actuation system (30) configured to move the drive-shaft (7a-7b) along an axis (B) thereof.

## Description

### CROSS-REFERENCE TO RELATED APPLICATIONS

This patent application claims priority from Italian patent application no. 102024000023913 filed on October 25, 2024, the entire disclosure of which is incorporated herein by reference.

### TECHNICAL FIELD

The present invention relates to a wheel hub for a vehicle axle, in particular a wheel hub for an axle of a heavy vehicle comprising a reduction system integrated in the hub itself.

### BACKGROUND ART

As is known, it is essential to reduce the torque coming from the transmission shaft with respect to the axles in a wheeled vehicle provided with at least one internal combustion engine.

As is also known, vehicles are normally provided with a differential assembly configured to differentiate the torque coming from the transmission shaft between a pair of drive-shafts of the axle, for known dynamic requirements during driving of the vehicle.

The above-mentioned torque reduction is normally achieved through known gear devices placed between the transmission shaft and the aforesaid differential assembly.

However, in the case of heavy vehicles, it is known that these reduction ratios are insufficient in number to be able to supply an adequate reduction ratio between the torque at the transmission shaft and the torque at the wheels of the axle in the various load conditions.

In fact, it is clear that a heavy vehicle, such as a lorry, must withstand a considerable difference in weight between unloaded condition and maximum load condition and therefore the highest gears available are not necessarily those most suitable for the vehicle unloaded condition.

For this purpose, reduction systems integrated in the wheel hubs are known. However, these systems require further improvements to increase their efficiency.

Moreover, known reduction systems do not allow the gears contained therein to be engaged while the vehicle is moving, making it necessary to stop the vehicle, with consequent increases in downtimes.

The above-mentioned needs are even more pressing in the case of partially or fully electrified vehicles.

Therefore, there is the need to provide a reduction system for an axle of a vehicle that is able to solve the above-mentioned problems.

The object of the present invention is to satisfy the above-mentioned needs in an optimized and inexpensive manner.

### SUMMARY OF THE INVENTION

The aforesaid object is achieved by a wheel hub for an axle provided with an integrated reduction system and a vehicle as claimed in the appended claims, which are an integral part of the present description.

### BRIEF DESCRIPTION OF THE DRAWINGS

For a better understanding of the present invention, a preferred embodiment is described below by way of non-limiting example and with reference to the accompanying drawings, wherein:
- Fig. 1 is a schematic sectional view from above of a vehicle provided with wheel hubs according to the invention;
- Fig. 2 is a schematic sectional view of an axle provided with wheel hubs according to the various embodiments of the invention;
- Figs. 3 and 4 are sectional views of a vehicle hub according to a first embodiment of the invention in different operating phases;
- Figs. 5 and 6 are sectional views of a vehicle hub according to a second embodiment of the invention in different operating phases;
- Figs. 7 and 8 are sectional views of a vehicle hub according to a third embodiment of the invention in different operating phases, and

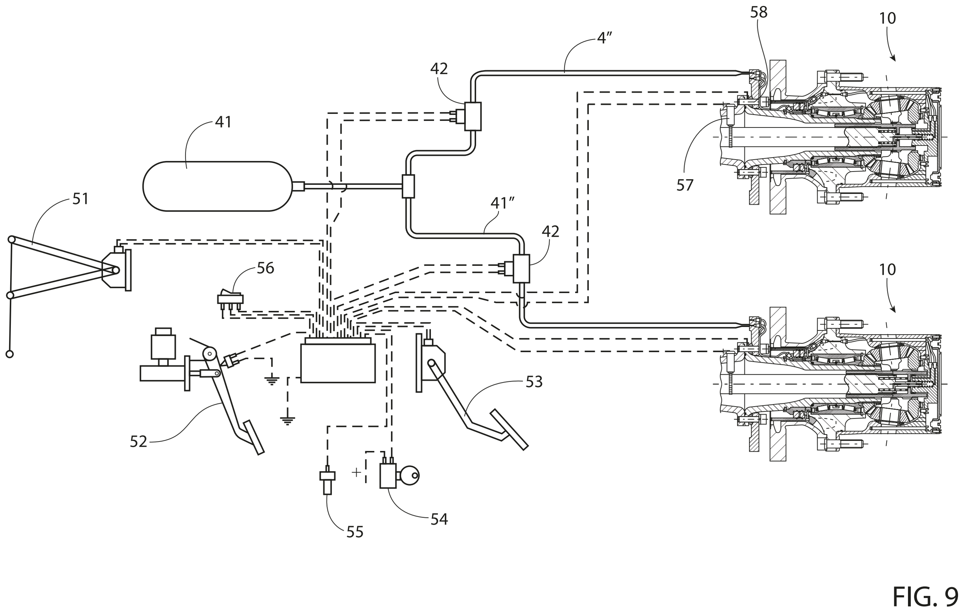

- Fig. 9 is a schematic view of a control system for the vehicle hub according to the various embodiments of invention.

### DETAILED DESCRIPTION OF THE INVENTION

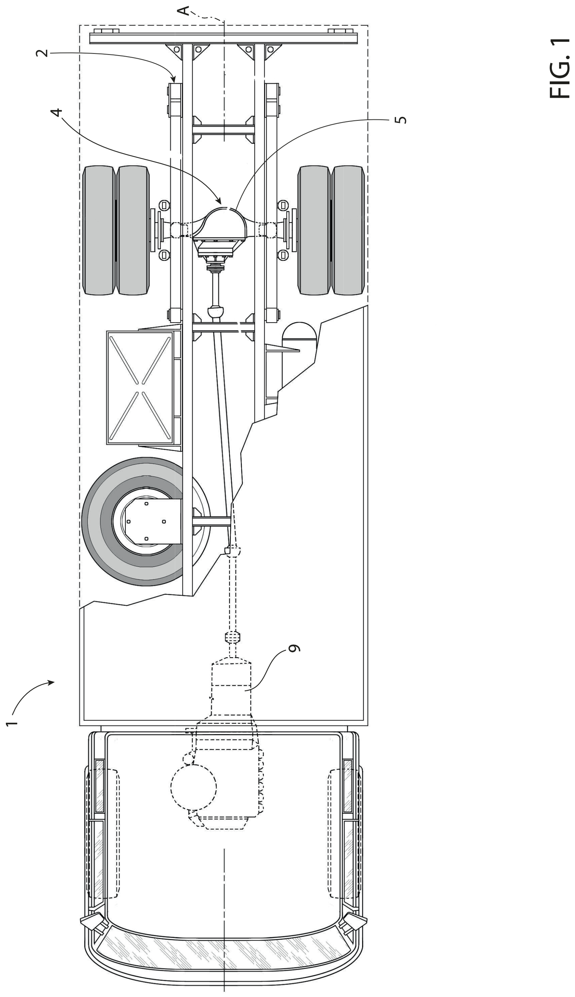

Fig. 1 illustrates a commercial or heavy vehicle 1 comprising a chassis 2 extending along a longitudinal axis A and movable by means of wheels 3 carried by an axle 4.

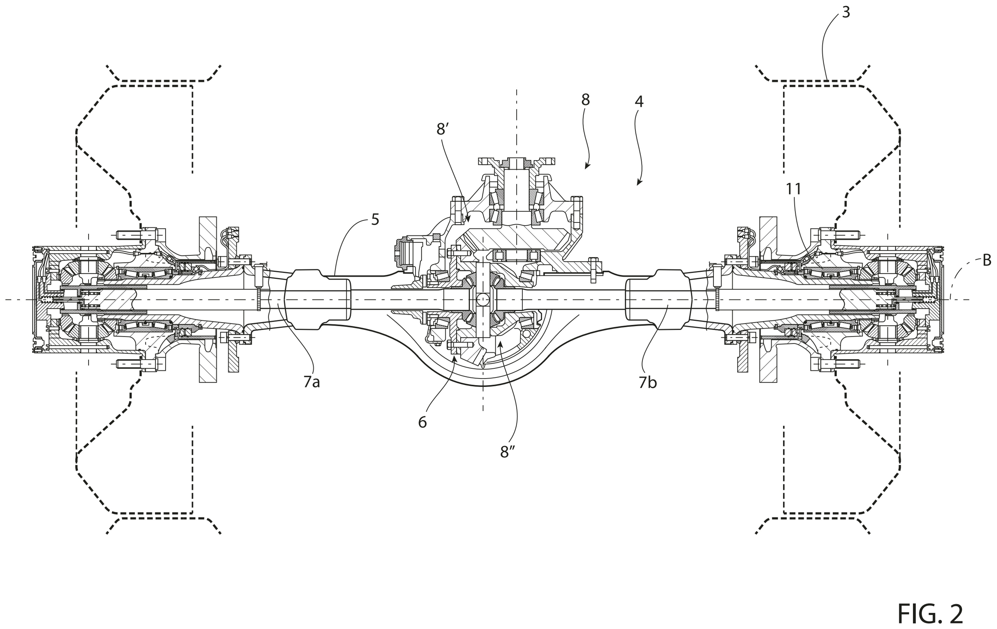

As illustrated in Fig. 2, the axle 4 comprises a casing 5 defining a space 6 suitable to house, at least partially, a pair of drive-shafts 7a, 7b extending along an axis B transverse with respect to the longitudinal axis A of the vehicle 1.

In particular, the drive-shafts 7a, 7b are operatively connected, at a first end, to a transmission 8 of the vehicle 1 and at the opposite side to respective wheel hubs 10. In the case illustrated by way of example, the transmission 8 comprises a gear 8' that rests on a differential 8'' which divides the torque between the pair of drive-shafts 7a, 7b.

In particular, the gear 8' is operatively connected to a torque source 9 such as a powertrain, for example an internal combustion engine.

In the embodiment illustrated, the gear 8' is a bevel gear; however, it is clear that - just as for the differential 8'' - it could be produced differently.

With regard to the wheel hubs 10, for the sake of simplicity reference will be made to only one of these, for example to the right one, and the considerations set down below also apply in the same way to the left wheel hub, naturally, as the structure described herein has mirror symmetry with respect to the longitudinal axis A of the vehicle 1.

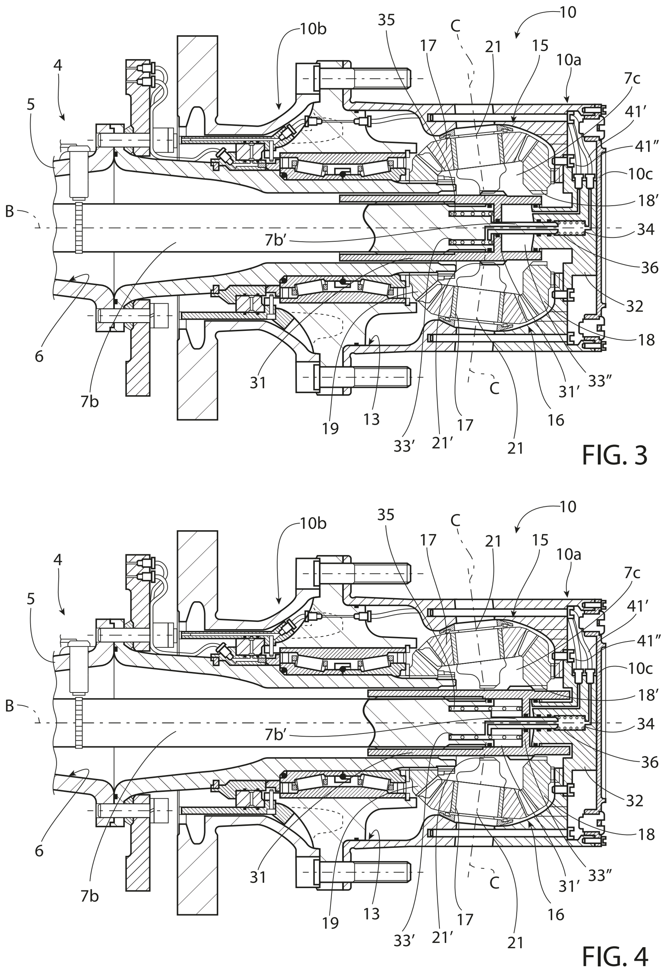

The wheel hub 10, as can be seen better in Figs. 3 to 8, is supported in a rotationally free manner with respect to the casing 5. In particular, it is hollow and coaxial with respect to the transverse axis B. In the embodiments described, the wheel hub 6 is supported by means of support elements 11, such as a pair of tapered bearings and sealing means, such as O-rings.

In particular, the hub 10 comprises a main portion 10a substantially cylindrical in shape carried by the casing 2, and an annular portion 10b housed at an end portion of the casing 5 and carried by the main portion 10a.

Advantageously, the main portion 10a and the annular portion 10b are coupled by threaded means, of known type, and, optionally, with the aid of further intermediate parts, as a function of the assembly required for the type and weight of the vehicle and hence not described in detail.

The cylindrical portion 10a defines, with the end part of the casing 5, a chamber 13, axially delimited along the axis B by an axial wall 10c of the main portion 10a and, on the other side, by the end part of the casing 5; this chamber 13 is radially delimited around the axis B by the inner surface of the main portion 10a of the wheel hub 10.

The wheel hub 10 is operatively connected to the axle 4 by means of a reduction unit 15 housed inside the chamber 13 and configured to connect the wheel hub 10 to the drive-shaft 7b with two different transmission ratios, i.e., so that the speed/torque to the drive-shaft 7b is different with respect to the speed/torque to the wheel hub 10 according to two different speed ratios.

In particular, the reduction unit 15 comprises a gearing 16 configured to cooperate with a set of teeth 7c carried by the drive-shaft 7b between a first or a second position characterized so as to define different transmission ratios between drive-shaft 7b and wheel hub 10, as described below.

In particular, the gearing 16 is preferably of differential type comprising a plurality of satellites 17 carried by the wheel hub 10, in detail by the cylindrical portion 10a, and a pair of toothed wheels 18, 19 meshing with these satellites 17. Preferably, the gearing 16 comprises four satellites 17 carried in a cross by the wheel hub 10.

In more detail, a first toothed wheel 19 is carried integral by the end of the casing 5 while a second toothed wheel 18 is carried rotationally free from the main portion 10a of the hub 10. In particular, this second toothed wheel 18 is supported axially free to rotate around the axis B on the axial wall 10c of the cylindrical portion 10a.

Each satellite 17 is carried by the wheel hub 10 by means of respective pins 21 around which each satellite 17 can rotate, for example by means of a bushing. The pins 21 are fixedly integral with the wheel hub 10 and fixed in respective openings, for example through threaded elements/plugs or through any known fixing method.

Each pin 21 extends along an axis C incident with respect to the axis B of the axle 1. Consequently, the toothed wheels 18, 19 mesh with the satellites 17 by means of respective conical couplings.

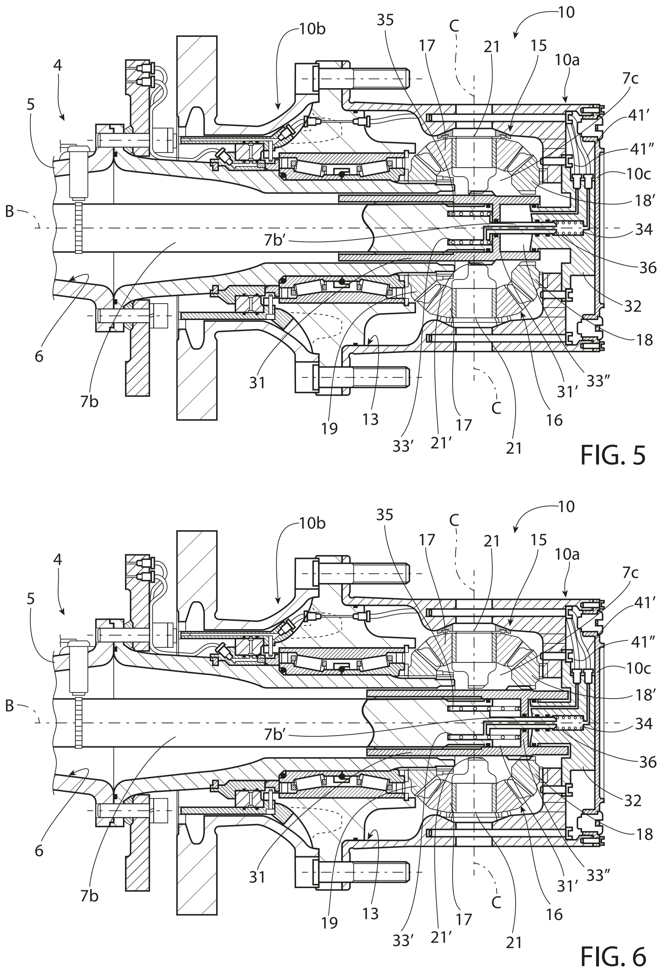

In the embodiment of Figs. 5 and 6, the axes C of the pins 21 are perpendicular to the longitudinal axis B of the axle 1 so that the dimensions of the toothed wheels 18, 19 are substantially the same as each other.

In the embodiment of Figs. 3 and 4, the axes C of the pins 21 are inclined with respect to the longitudinal axis B of the axle 1 by an acute angle facing towards the casing 5, so that the first toothed wheel 19 has a smaller radial extension with respect to the axis B than the second toothed wheel 18.

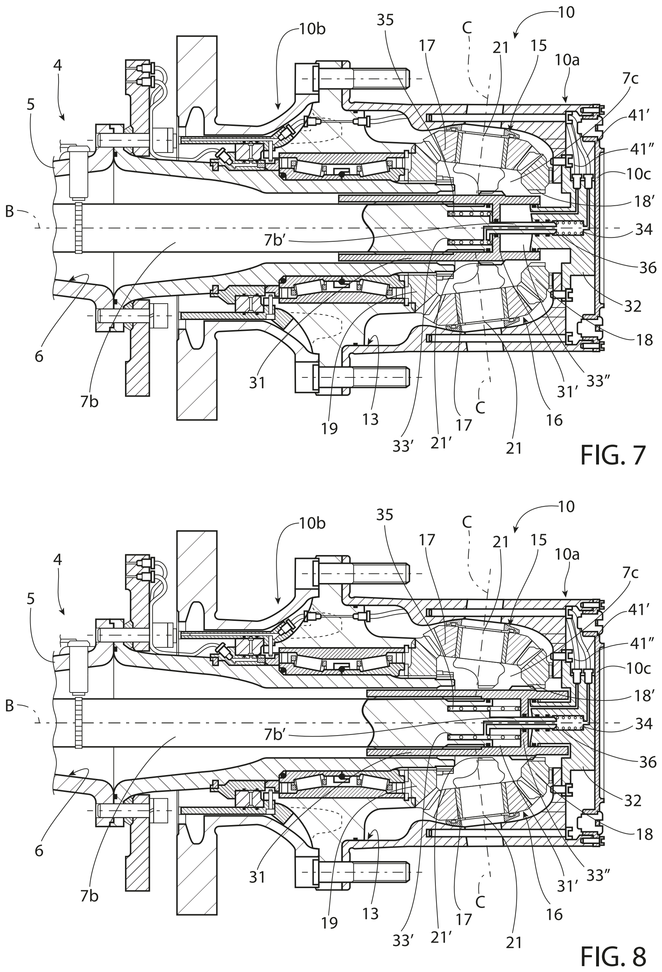

In the embodiment of Figs. 7 and 8, the axes C of the pins 21 are inclined with respect to the longitudinal axis B of the vehicle 1 by an acute angle facing towards the axial wall 10c of the wheel hub 10, so that the first toothed wheel 19 has a larger radial extension with respect to the axis B than the second toothed wheel 18.

In particular, the set of teeth 7c is carried by a sleeve 31 carried movable on the drive-shaft 7b so as to cause the set of teeth 7c to take a first position in which it cooperates with a set of teeth 21' integral with the pins 21 or a second position in which it cooperates with a set of teeth 18' integral with the second toothed wheel 18.

The wheel hub 10 comprises an actuation system 30 suitable to move the sleeve 31; in particular, this actuation system 30 is operatively interposed between the wheel hub 10, in particular between the axial wall 10c and the drive-shaft 7b.

The sleeve 31 is carried free to translate along the axis B but linearly integral with the drive-shaft 7b, for example through a grooved coupling and cooperates in contact with a support portion 32 fixed to the axial wall 10c of the wheel hub 10.

In particular, the support portion 32 is rigidly carried by the axial wall 10c facing the drive-shaft 7b and defines a first chamber 34, as described in detail below.

Advantageously, the support portion 32 has a cylindrical shape and externally supports the sleeve 31 that is configured to slide thereon along the axis B.

The sleeve 31 advantageously comprises a hollow cylindrical main portion, being placed around the drive-shaft 7b, and comprises a radial septum 31' extending radially inside the main portion configured to divide the sleeve 31 into a portion cooperating in a sliding manner with the drive-shaft 7b and a portion cooperating in a sliding manner with the support portion 32.

The drive-shaft 7b is configured to cooperate in a sealed sliding manner with the aforesaid sleeve portion 31 thereby defining a second chamber 33' radially delimited by the sleeve 31 and axially delimited along the axis B by the radial septum 31' and by the end of the drive-shaft 7b.

The sleeve portion 31 cooperates in a sealed sliding manner with the support portion 32, thereby defining a third chamber 33" radially delimited by the sleeve 31 and axially delimited along the axis B by the radial septum 31' and by the support portion 32.

Advantageously, the actuation system 30 further comprises first elastic means 35 operatively interposed between the drive-shaft 7b and the sleeve 31, in particular with respect to the radial septum 31' and hence housed in the second chamber 33'.

In detail, the elastic means 35 cooperate in contact allowing sliding relative to the rotation with respect to the elements with which they are in contact, for example through a bushing or equivalent rotating support elements.

The elastic means 35 advantageously comprise a spiral spring, such as a helical spiral spring.

Preferably, the elastic means 35 are housed in a seat realized in the drive-shaft 7b and suitable to house part of the spiral spring so as to prevent buckling thereof.

Advantageously, the drive-shaft 7b comprises a protuberance 7b', for example shaped as a piston, as illustrated, configured to slide, in a sealed manner, within the first chamber 34.

The third chamber 34 advantageously houses therein second elastic means 36 configured to exert a force suitable to move the protuberance 7b', and consequently the drive-shaft 7b, away from the axial wall 10c.

The elastic means 36 advantageously comprise a spiral spring, such as a helical spiral spring, interposed with contact between the protuberance 7b' and the support portion 32, in detail with an end wall of the first chamber 34.

Advantageously, the first chamber 34 is fluidically connected to the second chamber 33' by means of a duct realized within the protuberance 7b' and hence configured to allow pressurized fluid to enter or exit the second chamber 33'.

In particular, the first chamber 33' is fluidically connected to a first duct 41' and the second chamber 33'' is connected to a second duct 41'' which is fluidically connectable to the source 41 of pressurized fluid.

The first and the second duct 41', 41" allow fluidic connection between the source 41 of fluid and the chambers 34, 33' thanks to a plurality of rotary fluidic connection joints, not described for the sake of brevity, but schematized in the accompanying drawings.

Advantageously, the vehicle 1 further comprises an electronic control unit 50 and a plurality of sensors suitable to detect quantities relating to different operational parameters of the vehicle; the control unit 50 comprises processing means electronically connected to the sensor means to acquire the data detected by the sensor means and consequently control the passage of pressurized fluid between the first or second chamber 34, 33'.

In particular, the sensors can be connected to the control unit 50 by cable or electromagnetically and the control unit 50 is configured to control valve means 42 advantageously interposed along the respective ducts 41', 41'' and configured to allow or prevent the passage of pressurized fluid from the source 51 to the chambers 34, 33'.

These valve means 42 can, for example, be solenoid valves.

In particular, the electronic unit 50 contains stored data relating to control of the actuation system 30 and of the valve means 42.

The vehicle 1 can further comprise control means (not illustrated) configured to vary the data stored in the control unit 50 so as to vary the actuation conditions of the actuation system 30 and of the valve means 42.

Preferably, the sensor means comprise at least some of the following sensor means:
- A load sensor 51 configured to detect the load of a suspension connecting the axle 4 to the chassis 2, for example a load cell;
- A clutch sensor 52 configured to detect the opening of a control clutch of the transmission 8, for example a position sensor connected to the clutch pedal;
- An accelerator sensor 53 configured to detect the acceleration of the vehicle 1, for example a position sensor connected to the accelerator pedal;
- An ignition sensor 54 configured to detect the ignition of the vehicle 1, for example a movement sensor of the key ignition system;
- A speed sensor 55 configured to detect a rotation speed of the output shaft of the powertrain 9, for example a phonic wheel;
- A control sensor 56 configured to detect the activation of the possibility of varying the ratio of the wheel hub, for example a button or icon on a display;
- A speed sensor 57 configured to detect the rotation speed of the axle 4, hence of the drive-shafts 7a, 7b, such as a phonic wheel or an encoder; and
- A speed sensor 58, configured to detect the speed of the wheel hub 10, such as an ABS sensor of phonic wheel or encoder type.

Operation of the wheel hub according to the invention described above is as follows.

In a first operational condition (Figs. 4, 6, 8) the pressurized fluid is controlled to increase the pressure in the third chamber 33'' against the thrust of the first elastic means 35, which are compressed, and acting on the radial septum 31' and in turn on the sleeve 31. Consequently, the sleeve 31 can move on the drive-shaft 7b, moving the radial septum 31' away from the drive-shaft 7b and hence the set of teeth 7c that meshes with the set of teeth 21' integral with the pins 21 thus moving them directly and thus causing the movement of the wheel hub 10.

In a second operational condition (Figs. 3, 5, 7) the pressurized fluid is controlled to increase the pressure in the third chamber 33" acting in parallel to the thrust of the first elastic means 35 pushing the radial septum 31', which in turn moves the sleeve 31. Consequently, the sleeve 31 can move on the drive-shaft 7b causing the radial septum 31' to come into contact with the drive-shaft 7b and hence the set of teeth 7c meshes with the set of teeth 18' of the first toothed wheel 18 thereby moving the satellites 17 which move of the pins 21 and hence the wheel hub 10.

In the first operational condition the speed of the wheel hub 10 is clearly greater, being the same as the drive-shaft 7b and hence being suitable for conditions of lower torque levels to be transmitted than the first operational condition.

In both operational conditions, the second elastic means 36 prevent the first chamber 34 from being fully occupied by the protuberance 7b', hence preventing the circulation of fluid towards the second chamber 33'.

According to the above, the present invention also relates to a method for controlling a wheel hub 10 provided with a reduction unit 15 of the type described above.

This method essentially comprises the following steps:
- Detecting a plurality of physical quantities relating to operating parameters of the vehicle 1;
- Processing such detected physical quantities to identify a vehicle load condition;
- Verifying whether the vehicle load condition complies with the reduction ratio of said wheel hub 10;
- If it complies, the ratio is maintained, otherwise the actuation system is controlled to switch to a different reduction ratio.

In particular, control of the actuation system 30 comprises sending a control signal to the valve means 42.

In particular, the method illustrated above can be stored and processed in the control unit 50 described above and the physical quantities detected can be some of the quantities detected by the sensor means 51-58.

Verification of the vehicle load condition can be realized through verification of the quantities detected with respect to physical quantities stored in the control unit 50, for example through lookup tables (LUTs) deriving from specific experimental tests for the particular type of vehicle.

Otherwise, the above-mentioned verification can be realized through comparison with respect to a value deriving from mathematical interpolations between said physical quantities.

From the above, the advantages of a wheel hub for a vehicle axle comprising an integrated reduction system according to the invention are evident.

Thanks to the system proposed, it is possible to provide a reduction system integrated in a wheel hub that is versatile, compact, inexpensive, and easy to assemble and maintain with respect to known systems.

Thanks to the additional reduction system and to the two transmission ratios that can be chosen according to vehicle type and size, it is possible further reduce fuel consumption and hence emissions of pollutants.

In particular, the use of a gearing integrated in the wheel hub makes it possible to obtain high transmission ratios through a sturdy gear and suitable for the high loads of an axle for a heavy vehicle.

In particular, the actuation system proposed is particularly versatile, easy to maintain and replace.

Moreover, the presence of two ducts that selectively inject air into two different chambers allows the actuator means to activate the change in reduction ratio in a faster and more controlled manner. In particular, it is possible to control this change during vehicle movement.

In fact, thanks to the control method described, it is possible to engage the gear in the reduction unit 15 when the vehicle is moving.

The control can be automated and stored in the electronic unit and the control variables can be stored or modified in advance by the driver.

Finally, it is clear that modifications and variations can be made to the wheel hub of a vehicle axle comprising an integrated reduction system according to the present invention without departing from the scope of protection defined by the claims.

Naturally, as stated, casing 4 and wheel hub 10 can have different forms and be produced in several different pieces.

Further, the toothed wheels and the gears described could vary, and elements not described but the existence of which is known for the assembly of an axle according to the present invention could be present.

Clearly, although the above description refers to an air actuation, which is the most effective and inexpensive, it would also be possible to use actuator means of equivalent type, such as electromagnetic, mechanical or fluid actuators configured to move the sleeve 31 in place of the pressure force of the air described in the present application.

Moreover, the method described could comprise different methods for verification of the condition of engagement of the gears between wheel hub and drive-shafts, as said, through verification of the limit values deriving from mathematical interpolations or relations based on tables.

## Claims

1. Wheel hub (10) for an axle (4) of a vehicle (1) comprising:
- a hollow portion (10a) carried in a rotationally free manner on a casing (5) of said axle (4) around an axis (B) of the latter, said portion (10a) defining a chamber (13) between an internal wall thereof and said casing (5),
- a reduction unit (15) housed inside said chamber (13) and configured to vary the torque transmitted by a drive-shaft (7a, 7b) of said axle (4) and said wheel hub (10), said reduction unit (15) comprising a gearing (16),
said gearing (16) comprising:
a plurality of satellites (17) carried by respective pins (21) integral with said portion (10a);
a first and a second toothed wheel (18, 19), said second toothed wheel (19) being carried fixedly integral with said casing (5), said first toothed wheel (18) being carried rotationally free from said portion (10a);
- an actuation system (30) comprising a sleeve (31) integral with the rotation and free to move along said axis (B) around said drive-shafts (7a, 7b), said sleeve (31) comprising a set of teeth (7c),
said set of teeth (7c) being configured to cooperate selectively with a set of teeth (21') integral with said pins (21) or with a set of teeth (18') integral with said first toothed wheel (18) depending on the position of said sleeve (31) on said drive-shafts (7a, 7b) along said axis (B), thus defining different transmission ratios between said drive-shafts (7a, 7b) and said wheel hub (10).

2. Wheel hub according to claim 1, wherein said pins (21) extend along an axis (C) incident with respect to said axis (B), said axis (C) being perpendicular or inclined at an acute angle directed towards said casing (5) or inclined at an acute angle opposite with respect to said casing (5).

3. Wheel hub according to one of the preceding claims, further comprising a support portion (32) rigidly carried by said portion (10a) and configured to cooperate in a sealed sliding manner with said sleeve (31), said sleeve (31) comprising a hollow cylindrical main portion sliding on said drive-shaft (7b) and a dividing radial septum portion (31') extending radially inside said main portion and dividing said sleeve (31) into two portions, a first portion cooperating in a sealed sliding manner with said drive-shaft (7b) and defining a second chamber (33') and a second portion cooperating in a sealed sliding manner with said support portion (32) and defining a third chamber (33") connectable to a source (41) of pressurized fluid of said vehicle (1).

4. Wheel hub according to claim 3, wherein said actuation system (30) comprises first elastic means (35) operatively interposed between said sleeve (31) and said radial septum portion (31') and housed in said second chamber (33'), said first elastic means (35) being configured to exert a force directed at pushing said radial septum portion (31') towards the opposite side of said drive-shaft (7b).

5. Wheel hub according to claim 4, wherein said first elastic means (35) comprise a spiral spring.

6. Wheel hub according to claim 4 or 5, wherein said first elastic means (35) are partly housed in a seat realized in said drive-shaft (7b).

7. Wheel hub according to one of claims 3 to 6, wherein said support portion (32) defines a first chamber (34) fluidically connected to said second chamber (33').

8. Wheel hub according to claim 7, wherein said axle (7b) defines a protuberance (7b') housed in a sliding seal within said first chamber (34), said protuberance (7b') defining a duct connecting said first and second chambers (34, 33').

9. Wheel hub according to claim 7 or 8, further comprising second elastic means (36) housed in said first chamber (34) and configured to exert a force against said protuberance (7b').

10. Wheel hub according to claim 9, wherein said second elastic means (36) comprise a helical spring interposed between a protuberance (7b') and said support portion (32).

11. Vehicle axle (4) comprising:
- a casing (5) defining a space (6) along an axis (B);
- a pair of drive-shafts (7a, 7b) housed at least partially in said space (6) and comprising respective internal ends cooperating with a transmission (8) of said vehicle (1) configured to provide a driving torque to said drive-shafts (7a, 7b);
- respective wheel hubs (10) according to one of the previous claims, said wheel hubs (10) being carried by said drive-shafts (7a, 7b) on respective external ends opposite to said internal ends and in a rotationally free manner from said casing (5).

12. Vehicle (1) comprising a chassis (2), a powertrain (9), a transmission (8) and at least one axle (4) according to claim 10.

13. Vehicle according to claim 12, comprising a source of pressurized fluid (41) fluidically connected via at least one duct (41', 41'') to said actuation system (30) and valve means (42) fluidically interposed on said at least one duct (41', 41") to regulate the passage of pressurized fluid.

14. Vehicle according to claim 13, comprising a control unit (50) and a plurality of sensor means (51-58) configured to detect physical quantities relating to operational conditions of said vehicle (1), said control unit (50) comprising processing means electrically connected to said sensor means (51-58) to acquire the data detected by them, process them and consequently control said valve means (42) based on data relating to said operational conditions stored in said processing means.

15. Vehicle according to claim 14, comprising control means configured to vary the data stored in said electronic unit (50) relating to said operational quantities.

16. Vehicle according to claim 14 or 15, comprising at least some of the following sensor means (51-58):
• A load sensor (51) configured to detect the load of a suspension connecting said axle (4) to said chassis;
• A clutch sensor (52) configured to detect the opening of a control clutch of said transmission (8);
• An accelerator sensor (53) configured to detect the acceleration of said vehicle (1);
• An ignition sensor (54) configured to detect the ignition of said vehicle (1);
• A speed sensor (55) configured to detect a rotation speed of an output shaft of said powertrain (9);
• A control sensor (56) configured to detect the activation of the possibility of varying the ratio of said wheel hub (10)
• A speed sensor (57) configured to detect the speed of said drive-shafts (7a, 7b); and
• A speed sensor (58), configured to detect a speed of said wheel hub (10).

17. Method for controlling a wheel hub (10) in a vehicle according to claim 16, comprising the following steps:
• Detecting a plurality of physical quantities relating to operating parameters of said vehicle (1);
• Processing such detected physical quantities to identify a vehicle load condition;
• Verifying whether the vehicle load condition complies with the reduction ratio of said wheel hub (10);
• If it complies, said ratio is maintained, otherwise said actuation system (30) is controlled to switch to a different reduction ratio.

18. Method according to claim 17, wherein said control of said actuation system (30) comprises sending a signal to control said valve means (42).
